# EUROPEAN PATENT APPLICATION

(11) **EP 3 269 535 A1**
(43) Date of publication of application: **17.01.2018**
(21) Application number: 15884624.6
(22) Date of filing: 12.03.2015
(51) Int. Cl.: B29C 67/00, B22F 3/105

(54) **APPARATUS FOR MANUFACTURING THREE-DIMENSIONAL SHAPED OBJECT, AND METHOD FOR MANUFACTURING STRUCTURE**

(71) Applicant: Nikon Corporation, Tokyo 108-6290 (JP)
(72) Inventor: TSUMURAYA, Hiroo, Tokyo 108-6290 (JP); NAKAJIMA, Masao, Tokyo 108-6290 (JP)
(74) Representative: Hoffmann Eitle
(86) International application number: PCT/JP2015/057375
(87) International publication number: WO 2016/143137

(57) **Abstract**

An apparatus for manufacturing a three dimensional shaped object includes: a manufacturing unit that manufactures a three dimensional shaped object in which a plurality of solidified layers are built up together by repeating to manufacture a solidified layer, which is layered, by performing solidification processing upon a material that is positioned in a region set according to a shape of the three dimensional shaped object that is to be manufactured, to supply a new material upon an upper portion of the solidified layer that has been manufactured, to perform the solidification processing upon the new material and thus to manufacture a new solidified layer; and an inspecting unit that inspects the solidified layer that has already been built up, while the plurality of solidified layers are being built up together.

## Description

### TECHNICAL FIELD

The present invention relates to an apparatus for manufacturing a three dimensional shaped object, and to a method for manufacturing a structure.

### BACKGROUND ART

A three dimensional manufacturing device that manufactures a three dimensional shaped object by sequentially building up together a plurality of manufactured layers has been known from the prior art (for example, refer to Patent Document #1).

### CITATION LIST

### PATENT LITERATURE

PTL1: Japanese Laid-Open Patent Publication 2003-305777.

### SUMMARY OF INVENTION

### TECHNICAL PROBLEM

However, since inspecting of the state of manufacture is performed after the additive manufacturing of the manufactured object has been completed, it has not been possible, during the additive manufacturing process, to detect serious defects or the like that have occurred during the additive manufacturing in the manufactured layers.

### SOLUTION TO PROBLEM

According to the 1st aspect of the present invention, an apparatus for manufacturing a three dimensional shaped object comprises: a manufacturing unit that manufactures a three dimensional shaped object in which a plurality of solidified layers are built up together by repeating to manufacture a solidified layer, which is layered, by performing solidification processing upon a material that is positioned in a region set according to a shape of the three dimensional shaped object that is to be manufactured, to supply a new material upon an upper portion of the solidified layer that has been manufactured, to perform the solidification processing upon the new material and thus to manufacture a new solidified layer; and an inspecting unit that inspects the solidified layer that has already been built up, while the plurality of solidified layers are being built up together.

According to the 2nd aspect of the present invention, it is preferable that in the apparatus for manufacturing a three dimensional shaped object according to the 1 st aspect, the inspecting unit inspects the solidified layer before the manufacturing unit forms a new material layer, which is layered, upon the upper portion of the solidified layer.

According to the 3rd aspect of the present invention, it is preferable that in the apparatus for manufacturing a three dimensional shaped object according to the 2nd aspect, the manufacturing unit forms a material layer, which is layered, on a region where the solidification processing is to be performed, and performs the solidification processing under predetermined solidification processing conditions; and the apparatus further comprises; a manufacturing condition change unit that, based upon results of inspecting of the solidified layer by the inspecting unit, changes at least one of manufacturing conditions when forming the new material layer in the region where the solidification processing is to be performed, and the solidification processing conditions when performing the solidification processing upon the new material layer.

According to the 4th aspect of the present invention, it is preferable that in the apparatus for manufacturing a three dimensional shaped object according to the 3rd aspect, when changing the manufacturing conditions, the manufacturing condition change unit changes at least one of supply speed of the material in the region in which solidification processing for the new material layer is to be performed, thickness of the new material layer, a number of times the material is supplied for the new material layer, a temperature of the new material layer, and the material from which the new material layer is formed.

According to the 5th aspect of the present invention, it is preferable that in the apparatus for manufacturing a three dimensional shaped object according to the 4th aspect, the inspecting unit detects roughness of a surface of the solidified layer; and the manufacturing condition change unit changes the manufacturing conditions according to the roughness detected by the inspecting section.

According to the 6th aspect of the present invention, it is preferable that in the apparatus for manufacturing a three dimensional shaped object according to the 4th or 5th aspect, if a hole has been detected by the inspecting unit, the manufacturing condition change unit changes the manufacturing condition according to a shape, a size, and a positional relationship of each of the holes.

According to the 7th aspect of the present invention, it is preferable that in the apparatus for manufacturing a three dimensional shaped object according to the 4th aspect, the inspecting unit acquires positional information for a hole formed in the solidified layer; and the manufacturing condition change unit changes the manufacturing conditions according to the positional information for the hole acquired from the inspecting unit.

According to the 8th aspect of the present invention, it is preferable that in the apparatus for manufacturing a three dimensional shaped object according to the 7th aspect, the manufacturing condition change unit changes the manufacturing conditions so that the thickness of the new material layer becomes thinner, according to any one of a shape of the hole, a size of the hole, and a number of holes internal to the solidified layer detected by the inspecting unit.

According to the 9th aspect of the present invention, it is preferable that in the apparatus for manufacturing a three dimensional shaped object according to any one of the 4th through 8th aspects, the manufacturing condition change unit changes the solidification processing conditions according to the results of inspecting or according to the manufacturing conditions.

According to the 10th aspect of the present invention, it is preferable that in the apparatus for manufacturing a three dimensional shaped object according to the 9th aspect, the manufacturing unit comprises an irradiation unit that hardens the material layer, which is layered, by scanning the material layer that is layered while irradiating an energy beam thereupon; and according to the manufacturing conditions that have been changed, the manufacturing condition change unit changes at least one of a scanning path or a scanning speed of the energy beam irradiated by the irradiation unit, an intensity of the energy beam, or a temperature of the material layer when irradiated with the energy beam.

According to the 11th aspect of the present invention, it is preferable that in the apparatus for manufacturing a three dimensional shaped object according to any one of the 3rd through 10the aspects, the manufacturing condition change unit changes the solidification processing conditions according to composition of the solidified layer or an internal structure of the solidified layer, as detected by the inspecting unit.

According to the 12th aspect of the present invention, it is preferable that in the apparatus for manufacturing a three dimensional shaped object according to any one of the 3rd through 11th aspects, the decision unit compares design information for the three dimensional shaped object or shape data for the three dimensional shaped object based upon the design information with the solidified layer that has been inspected by the inspecting unit, and the manufacturing condition change unit changes the manufacturing conditions and/or the solidification processing conditions based upon results of comparison.

According to the 13th aspect of the present invention, the apparatus for manufacturing a three dimensional shaped object according to any one of the 1 st through 11th aspects may further comprise a decision unit that, based upon results of inspecting of the solidified layer by the inspecting unit, makes a decision as to whether or not to supply the material to a region in which the solidification processing is to be performed.

According to the 14th aspect of the present invention, it is preferable that in the apparatus for manufacturing a three dimensional shaped object according to the 13th aspect, the decision unit compares design information for the three dimensional shaped object or shape data for the three dimensional shaped object based upon the design information with the shape of the solidified layer that has been inspected by the inspecting unit, and makes a decision as to whether to form a new material layer or to terminate manufacturing the three dimensional shaped object, according to results of comparison.

According to the 15th aspect of the present invention, it is preferable that in the apparatus for manufacturing a three dimensional shaped object according to the 14th aspect, the decision unit determines whether or not a defect can be corrected, and decides to form the new material layer if decision is made that correction is possible.

According to the 16th aspect of the present invention, it is preferable that in the apparatus for manufacturing a three dimensional shaped object according to the 15th aspect, the decision unit decides whether or not the defect can be repaired during manufacturing the next solidified layer, and, if a decision is made that the defect can be repaired, determines whether or not to change the manufacturing conditions for forming the new material layer or solidification processing conditions for solidification thereof.

According to the 17th aspect of the present invention, it is preferable that in the apparatus for manufacturing a three dimensional shaped object according to any one of the 1 st through 16th aspect, the manufacturing unit further comprises a correction unit that performs correction processing upon the solidified layer based upon results of inspecting of the solidified layer by the inspecting unit.

According to the 18th aspect of the present invention, it is preferable that in the apparatus for manufacturing a three dimensional shaped object according to the 17th aspect as depending upon the 15th aspect, if a decision is made by the decision unit that correction is possible, the manufacturing unit forms the new material layer after correction processing with the correction unit has been performed.

According to the 19th aspect of the present invention, it is preferable that in the apparatus for manufacturing a three dimensional shaped object according to the 18th aspect, if an outline shape of the solidified layer has an erroneous portion in which the error upon comparison with an outline shape in the design information for the three dimensional shaped object is greater than a predetermined value, then the correction unit cuts away the erroneous portion of the solidified layer.

According to the 20th aspect of the present invention, it is preferable that in the apparatus for manufacturing a three dimensional shaped object according to any one of the 1 st through 19the aspects, the inspecting unit comprises a shape measurement device that inspects an external shape of the solidified layer, and an internal measurement device that inspects an internal state of the solidified layer.

According to the 21 st aspect of the present invention, it is preferable that in the apparatus for manufacturing a three dimensional shaped object according to any one of the 1 st through 20th aspects, the material is a powder material.

According to the 22nd aspect of the present invention, the apparatus for manufacturing a three dimensional shaped object according to any one of the 1st through 21st aspects may further comprise a storage unit that stores information related to defects detected by the inspecting unit.

According to the 23rd aspect of the present invention, the apparatus for manufacturing a three dimensional shaped object according to the 22nd aspect may further comprise an analysis unit that analyzes a tendency for occurrence of defects based upon the information related to defects stored in the storage unit.

According to the 24th aspect of the present invention, it is preferable that in the apparatus for manufacturing a three dimensional shaped object according to the 23rd aspect, the analysis unit analyzes a change over time of the tendency for occurrence of defects; and the decision unit makes a decision as to whether to change the manufacturing conditions for the material layers or to change solidification processing conditions for the solidified layers, or to perform correction processing upon the solidified layers, based upon the change over time information that has been analyzed.

According to the 25th aspect of the present invention, a method for manufacturing a structure comprises: creating design information related to a shape of the structure; manufacturing the structure by performing solidification processing upon material that is positioned in regions set according to a shape of a three dimensional shaped object that is to be manufactured, based upon the design information; acquiring shape information by measuring the shape of the structure during manufacture thereof before the structure is manufactured,; and changing at least one of formation conditions during forming of new material, and solidification processing conditions when performing solidification processing upon the new material, according to the shape information that has been acquired.

According to the 26th aspect of the present invention, it is preferable that in the method for manufacturing a structure according to the 25th aspect, the shape information that has been acquired after the structure has been manufactured is compared with the design information.

According to the 27th aspect of the present invention, it is preferable that in the method for manufacturing a structure according to the 26th aspect, re-processing of the structure executed based upon results of comparison of the shape information with the design information is performed.

According to the 28th aspect of the present invention, it is preferable that in the method for manufacturing a structure according to the 27th aspect, in the re-processing of the structure, manufacture of the structure is performed for a second time based upon the design information.

### ADVANTAGEOUS EFFECTS OF INVENTION

According to the present invention, it is possible to detect defects or the like at various stages of the manufacturing process.

### BRIEF DESCRIPTION OF DRAWINGS

Fig. 1 is a perspective view of an apparatus for manufacturing a three dimensional shaped object according to a first embodiment;
Fig. 2 is a block diagram schematically showing the construction of this apparatus for manufacturing a three dimensional shaped object according to the first embodiment;
Fig. 3 is a figure for explanation of a scanning path when an irradiation unit irradiates a laser beam upon a material layer;
Fig. 4 is a schematic figure for explanation of the relationship between a defect hole and powder material;
Fig. 5 is a flow chart for explanation of the operation of this apparatus for manufacturing a three dimensional shaped object according to the first embodiment;
Fig. 6 is a perspective view of an apparatus for manufacturing a three dimensional shaped object according to a variant embodiment;
Fig. 7 is a block diagram showing the construction of a structure manufacturing system according to a second embodiment; and
Fig. 8 is a flow chart for explanation of the operation of this structure manufacturing system according to the second embodiment.

### DESCRIPTION OF EMBODIMENTS

### Embodiment #1

An apparatus for manufacturing a three dimensional shaped object according to an embodiment will now be explained with reference to the drawings. While, in the following explanation, an apparatus for manufacturing a three dimensional shaped object that manufactures a three dimensional shaped object by employing a per se known powder sintering lamination method (SLS: Selective Laser Sintering) is cited by way of example, this is not to be considered as being limitative of the present invention; it would also be acceptable to employ a heat melting lamination method (FDM: Fused Deposition Modeling), an optical shaping method, an ink jet method, a gypsum powder lamination method, or the like.

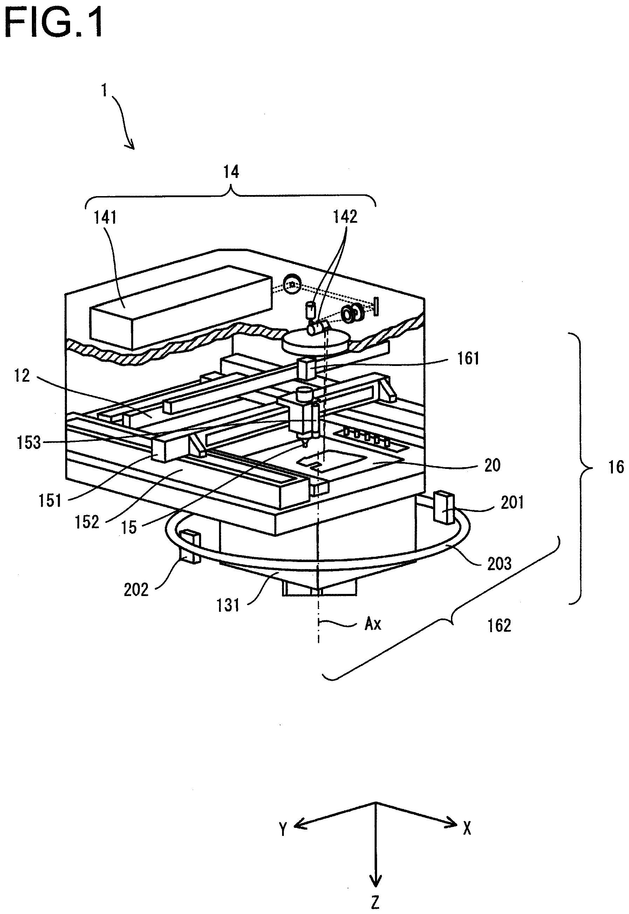

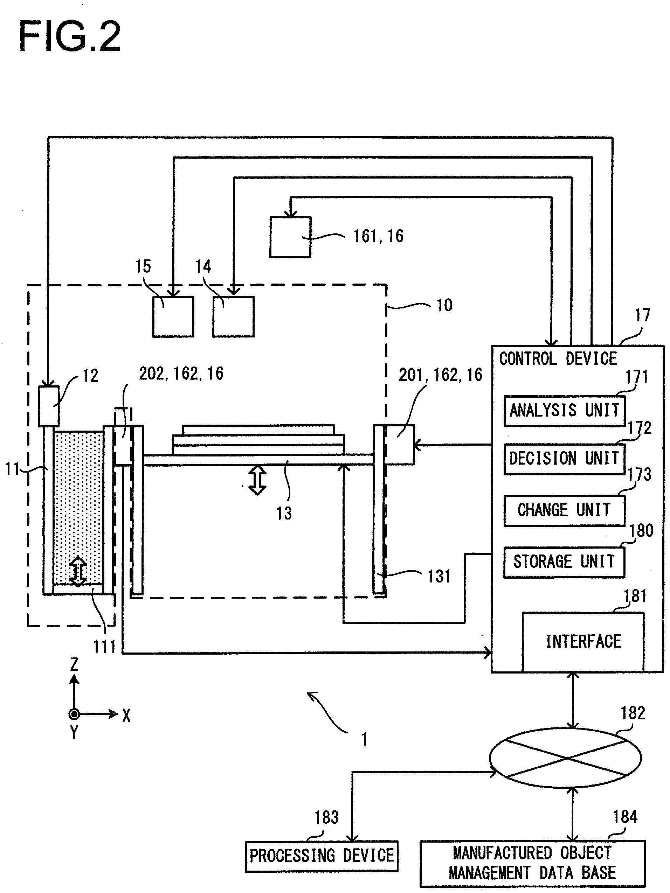

Fig. 1 is a perspective view of this apparatus 1 for manufacturing a three dimensional shaped object (hereinafter termed the "manufacturing apparatus"), and Fig. 2 is a block diagram schematically showing the construction of this manufacturing apparatus 1. It should be understood that, with the objective of facilitating understanding, the following explanation will be formulated in terms of an orthogonal coordinate system consisting of an X axis, a Y axis, and a Z axis as shown in Figs. 1 and 2. This manufacturing apparatus 1 comprises an additive manufacturing unit 10, an inspecting unit 16, and a control device 17. And the additive manufacturing unit 10 comprises a material supply tank 11, a re-coater 12, a vertically moving stage 13, an irradiation unit 14, and a cutting unit 15.

The material supply tank 11 is a holding vessel for containing a powder material, which is the material from which the three dimensional shaped object will be manufactured, and its bottom surface 111 is shifted along the vertical direction (i.e. the Z axis direction) by a drive mechanism not shown in the figures. For example, a metallic powder, a resin powder, a powder in which metallic particles are coated with a resin binder, or the like may be employed as this powder material. Moreover, a powder containing an iron-based powder as main component, or a powder containing at least one or more of a nickel powder, a nickel-based alloy powder, a copper powder, a copper-based alloy powder, or a graphite powder or the like in an iron-based powder may be employed as the metallic powder. For example, a blending amount of 60% to 90% by weight of iron-based powder having an average particle size of about 20 µm, blending amounts of 5% to 35% by weight of one or both of nickel powder and nickel-based alloy powder, blending amounts of 5% to 15% by weight of one or both of copper powder and copper-based alloy powder, or a blending amount of 0.2% to 0.8% by weight of graphite powder may be suggested. And, for example, a powder of nylon, polypropylene, ABS or the like having an average particle size of about 30 µm to 100 µm may be employed as the resin powder. And, as a powder in which metallic particles are coated with a resin binder, for example, a powder in which the surfaces of metallic particles are coated with a phenolic resin or with nylon may be employed.

It should be understood that the use of a powder material as the material for additive manufacturing is not to be considered as being limitative of the present invention; for example, it would also be possible to employ a UV curing resin or a thermos-setting resin or the like.

The re-coater 12 supplies the powder material held in the material supply tank 11 to an additive manufacturing chamber 131 while keeping its surface flat, so that a layer of a predetermined thickness Δd (hereinafter termed the "material layer") is formed. The additive manufacturing chamber 131 is an additive manufacturing processing working chamber, for additive manufacturing of a three dimensional shaped object by repeating to form the material layer and to manufacture a solidified layer due to this material layer that has been formed being hardened, whereby the plurality of solidified layers are built up together. The vertically moving stage 13 constitutes the bottom surface of the additive manufacturing chamber 131. According to control by the control device 17 that will be described hereinafter, the vertically moving stage 13 is shifted in the vertical direction (i.e. the Z axis direction) by a drive mechanism not shown in the figures). As will be described in detail hereinafter, when a solidified layer is manufactured upon the vertically moving stage 13 from the powder material that is supplied, the vertically moving stage shifts in the downward direction (i.e. the +Z axis direction), and then a new material layer is formed upon the upper portion of this solidified layer (i.e. upon its -Z axis side). This new material layer hardens, and thereby a new solidified layer is manufactured. By this process being repeated, a plurality of solidified layers are built up together, and thereby a three dimensional shaped object is manufactured.

The irradiation unit 14 irradiates a laser beam emitted from a laser oscillator 141 upon the surface of the material layer and scans this beam with a Galvano mirror unit 142, thereby melting and solidifying the powder material. The solidified layer is thus manufactured from the material layer by the powder material solidifying. In other words, the irradiation unit 14 performs solidification processing upon the material layer. For example, a carbon dioxide gas laser, a Nd:YAG laser, a fiber laser or the like may be used as the laser oscillator 141, and this laser oscillator 141 may emit infrared radiation, visible light radiation, ultraviolet radiation or the like.

It should be understood that it would also be acceptable for the irradiation unit 141 to emit an electron beam and to scan that electron beam over the surface of the material layer.

The cutting unit 15 includes a milling head or the like, and is shifted in two dimensions over the surface of the solidified layer by drive mechanisms 151, 152 according to control by the control device 17. Moreover, the cutting unit 15 is shifted along the Z axis direction by a drive mechanism of a vertical shift mechanism 153. In other words, the cutting unit 15 is built to be shiftable in three dimensions. The drive mechanism 151 comprises a guide rail that extends along the Y axis direction and a motor and so on. And the cutting unit 15 is disposed so as to be shiftable along this guide rail, and is shifted to and fro in the Y axis direction along the guide rail by the drive force of the motor. Moreover, the drive mechanism 152 comprises a guide rail that extends along the X axis direction and that is provided on the +Y axis side of the guide rail of the drive mechanism 151, another guide rail that extends along the X axis direction and that is provided on the -Y axis side of the guide rail of the drive mechanism 151, a motor, and so on. The guide rail of the drive mechanism 151 shifts along the X axis direction along the two guide rails of the drive mechanism 152 due to the drive force of its motor. Accordingly the cutting unit 151, which is disposed upon the guide rail of the drive mechanism 151, is shifted along the X axis direction.

It should be understood that, while the drive mechanisms 151, 152 are here cited as an example of a mechanism for shifting the cutting unit 15 along the X and Y directions, this construction should not be considered as being limitative; the manufacturing apparatus 1 may be provided with any suitable mechanism that is capable of shifting the cutting unit 15 along the X and Y directions.

The inspecting unit 16 comprises a three dimensional shape measurement device 161 and an X-ray inspecting device 162. The three dimensional shape measurement device 161 is provided above the cutting unit 15, acquires data related to the shape of the surface of the solidified layer manufactured by laser beam irradiation with the irradiation unit 14 (i.e. like outline shape data and surface shape data), and outputs this data to the control device 17. It should be understood that a non-contact type measurement device such as a laser scanner or the like, or a contact type measurement device such as a touch probe or the like, may be employed as this three dimensional shape measurement device 161. Moreover, instead of the three dimensional shape measurement device 161, it would also be acceptable to employ a two dimensional shape measurement device that acquires outline shape data and/or surface shape data of the solidified layer by employing an image capturing device. It is desirable for such an image measurement device to be provided with an image capturing device that has a telecentric image forming optical system, so that the shape of the outline of the solidified layer can be accurately obtained even if an uneven structure whose height is relatively great appears in the surface shape of the solidified layer. Furthermore, it is desirable for the image capturing device to be capable of changing over between dark field illumination and bright field illumination, and it may also be arranged for the image capturing device to perform this changeover according to the state of roughness of the surface of the solidified layer. Yet further, it would also be acceptable also to provide an illumination device that is capable of providing oblique illumination. And, in connection with the surface shape data, an SFF (Shape Form Focus) method of measuring the three dimensional shape by detecting focusing positions on the basis of measurement of the focused states of a plurality of different images that are acquired while shifting the focal point position, or a method of using a confocal microscope, or a method of measuring the three dimensional shape via an interference image obtained by causing reflected light from the solidified layer and light reflected from a reference mirror to interfere, may be employed by the image capturing device. Furthermore, it would also be possible to measure the three dimensional shape on the basis of a triangulation method performed by a laser scanner or by a pattern projection type shape measurement device or the like that measures the shape by projecting a pattern such as a grid or the like. It should be understood that it would be possible to provide a non-contact type sensor or a touch probe or the like to the three dimensional shape measurement device 161, and to make this sensor shiftable along a Y axis guide 161a or an X axis guide 161b, and moreover to make the sensor or touch probe or the like be shiftable to any desired Z position by a Z axis direction displacement mechanism not shown in the figures that is provided between the Y axis guide 161 a and the sensor or touch probe or the like. Furthermore, it would also be acceptable to arrange for it to be possible to acquire shape data for the solidified layer from any desired direction, by providing a tilt rotation mechanism between the Z axis direction displacement mechanism and the sensor or touch probe or the like.

The X-ray inspecting device 162 comprises an X-ray source 201 and a detector 202. According to control by the control device 17, the X-ray source 201 emits X-rays that spread out in the shape of a cone (i.e. a conical beam) or X-rays in the shape of a sector (i.e. a fan-shaped beam), with the point of emission as vertex. The optical axis of the X-rays is the line connecting the X-ray emission point of the X-ray source 201 and the center of an image capturing region of the detector 202 that will be described hereinafter. The X-ray source 201 may, for example, emit at least one of X-rays generated by an acceleration voltage of around 0.1 to 20 keV, and X-rays of around 20 keV to several MeV.

The detector 202 has an plane of incidence that is orthogonal to the XY plane, and is disposed so that X-rays emitted from the X-ray source 201 that have passed through the solidified layers that have been manufactured upon the vertically moving stage 13 are incident to this plane of incidence. This detector 202 comprises a scintillator unit that includes a per se known scintillation substance, a photomultiplier tube, a light detection unit, and so on. The detector 202 converts the energy of the X-rays that are incident to the plane of incidence of the scintillator unit into visible light or ultraviolet light optical energy which it then amplifies with the photomultiplier tube, and converts this amplified optical energy with the light detection unit described above into electrical energy, which is then outputted to the control device 17 as an electrical signal. In this detector 202, each of the scintillator unit, the photomultiplier tube, and the light detection unit is built by being subdivided into a plurality of pixels, and those pixels are arranged in two dimensional arrays. Due to this, it is possible to acquire the intensity distribution of the X-rays emitted from the X-ray source 201 that have passed through the solidified layers in one operation.

It should be understood that it would also be acceptable to arrange for the detector 202 not to convert the energy of the incident X-rays into optical energy, but rather into electrical energy that is then outputted as an electrical signal. And also the pixels of the detector 202 are not limited to being arranged two dimensionally. The detector 202 could be built as a linear sensor. Moreover, it would also be possible not to provide the detector 202 with any photomultiplier tube, but rather to provide a construction in which the scintillator unit is formed directly upon the light detection unit (i.e. the photoelectric conversion unit).

The X-ray source 201 and the detector 202 are provided so that they can be rotated around the external periphery of the additive manufacturing chamber 131 by a rotation mechanism 203, in a state in which the relative positional relationship of the X-ray source 201 and the detector 202 is preserved unchanged. The rotation mechanism 203 is arranged so that the rotational center of this rotation mechanism 203 is in the vicinity of the central position of a stage surface of the vertically moving stage 13. The rotation mechanism 203 may, for example, be constituted by a circular annular guide rail centered upon the rotation axis Ax, a motor, and so on, with the X-ray emission point of the X-ray source 201 and the surface of incidence of the detector 202 being shifted along this guide rail while being kept in positions that mutually oppose one another across the rotation axis Ax. In other words, the X-ray source 201 irradiates the solidified layer with X-rays from all directions while rotating with respect to the solidified layer, and the detector 202 detects the transmitted X-rays and outputs detection data to the control device 17. Thus, the X-ray inspecting device 162 acquires internal data about each of the solidified layers, such as the state of hardening at the boundary interfaces between the solidified layers, the internal compositions of the solidified layers, their crystalline structure, their stress distribution and so on. In other words, the detection data (i.e. the projection data) detected by the detector 202 includes the internal data described above and is outputted to the control device 17.

It should be understood that, among the plurality of solidified layers that have been built up upon the vertically moving stage 13, the X-ray inspecting device 162 irradiates X-rays upon the uppermost layer thereof (on the - Z axis side) or upon the solidified layers in the neighborhood of that uppermost layer, and the position in the Z direction in which the inspecting device is disposed is determined so that projection data for the interior of the three dimensional shaped object that is being manufactured can be detected.

Furthermore, instead of acquiring projection data in all directions for the solidified layer of the three dimensional shaped object that is being manufactured, it will also be acceptable for the X-ray inspecting device 162, for example, to output to the control device 17 projection data for the three dimensional shaped object being manufactured that has been acquired by emitting X-rays from two different directions (for example from directions that are 90° different). In other words it will be acceptable, after emission of X-rays by the X-ray inspecting device 162 has been performed, for the next emission of X-rays to be performed in the state in which rotation has been performed through 90° with respect to the vertically moving stage 13.

Moreover, instead of the X-ray inspecting device 162 rotating with respect to the solidified layer, it will also be acceptable for the solidified layer to rotate with respect to the X-ray inspecting device 162. In this case, for example, the solidified layer may be relatively rotated with respect to the X-ray inspecting device 162 by the vertically moving stage 13 being rotated around the rotation axis Ax by a rotation mechanism not shown in the drawings.

The control device 17 comprises a CPU and ROM and RAM and so on not shown in the figures, and is a calculation circuit that, on the basis of a control program, controls various structural elements of the manufacturing apparatus 1 and executes data processing of various types. Moreover defect information obtained by the control device 17 and/or additive manufacturing condition information determined by the control device 17 can be connected to a network 182 via an interface 181. Via this network 182, it is possible to transmit defect information and so on for a three dimensional shaped object manufactured by this manufacturing apparatus 1 to a processing device 183 that performs subsequent processing. Furthermore, it is also possible to transmit the defect information to a manufactured object management database 184 or the like that is used for management of the product quality of the manufactured objects. By doing this it is possible, in response to requirements from customers, to institute quick countermeasures in relation to manufactured objects that have been manufactured by this manufacturing apparatus 1. The control program is stored in a non-volatile memory within the control device 17, not shown in the figures. The control device provides the functions of an analysis unit 171, a decision unit 172, and a change unit 173. On the basis of the results of inspecting by the inspecting unit 16, the analysis unit 171 analyzes the shape of the solidified layer that has been manufactured and the roughness of its surface, or its internal structure or the like. And, on the basis of the results of this analysis by the analysis unit 171, the decision unit 172 makes a decision as to whether to continue with forming the next material layer, or to perform correction of the solidified layer, or to change one or more of various conditions for additive manufacturing (hereinafter these will be termed the "manufacturing conditions"), or to stop the additive manufacturing process. And if, on the basis of the results of analysis by the analysis unit 171, it has been decided by the decision unit 172 that the manufacturing conditions should be changed, then the change unit 173 changes the manufacturing conditions, and outputs signals to the various units corresponding to the changed details. The results of inspecting by the inspecting unit 16 and the results of analysis by the analysis unit 171 are temporarily stored in a storage unit 180 that is provided to the control device 17. It should be understood that the details of the analysis unit 171, the decision unit 172, and the change unit 173 will be described hereinafter.

The operation of this manufacturing apparatus 1 having the structure described above will now be explained.

First, the powder material in the material supply tank 11 is supplied to the additive manufacturing chamber 131, and a material layer is formed upon the vertically moving stage 13 (this is a "material layer forming process"). In this material layer forming process, according to control by the control device 17, the vertically moving stage 13 of the additive manufacturing chamber 131 shifts downward (in the +Z axis direction) by just the thickness Δd of the material layer, and the bottom surface 111 of the material supply tank 11 shifts upward (in the -Z axis direction) by just a predetermined amount. And the re-coater 12 shifts the upper portion of the material supply tank 11 over the surface of the additive manufacturing chamber 131 from the end portion on the -X axis side toward the +X axis direction up to the neighborhood of the end portion on the +X axis side of the additive manufacturing chamber 131 in order to form a material layer flattened equal to the predetermined thickness Δd while transferring the powder material onto the vertically moving stage 13.

Laser beam irradiation from the irradiation unit 14 is performed upon the material layer that has been formed, and a solidified layer is manufactured by the non-solidified powder material of the material layer becoming solidified (this is a "laser beam irradiation process"). In this laser beam irradiation process, the laser beam light emitted from the irradiation unit 14 is scanned over the surface of the material layer as described above. The path through which the laser beam is scanned (i.e. the scanning path) is set from sectional layer model information that is generated by the manufacturing apparatus 1 on the basis of the design information for the three dimensional shaped object that is to be manufactured, for example three dimensional shape data for the object being manufactured such as CAD data or STL (stereolithography) data or the like. Therefore the control device 17 sets the region for laser beam irradiation by the irradiation unit 14 according to the position of the vertically moving stage in the Z direction on the basis of the shape information for the corresponding layer model and sets the scanning path of the laser beam so that the laser beam is irradiated upon the material layer, which is the laser beam irradiation region. It should be understood that, if the additive manufacturing is performed while manufacturing support units for supporting the manufactured object in order to prevent falling over of the manufactured object or damage or the like thereto during the additive manufacturing process, then information specifying these support units is also included in the design information, in other words in the layer model information. Moreover, when generating this layer model information, it is preferable not to employ the design information for the three dimensional shaped object just as it is, but to generate layer model information while also taking into consideration change of shape due to thermal expansion. In particular, at the time point that the solidified layer is being manufactured, due to the laser beam irradiation, the solidified layer is at a higher temperature, as compared to the situation at normal temperature. However, if there is a large difference between the temperature in the environment in which the manufactured object is to be used and the temperature during the additive manufacturing of the solidified layer, then it is desirable for the layer model information to be generated in consideration of the coefficient of linear expansion due to this temperature difference.

Furthermore, it is desirable also to set permitted tolerance information that is calculated on the basis of the CAD data for each individual item of layer model information. This permitted tolerance information in each item of layer model information may be set according to the outline described in, for example, Japanese Laid-Open Patent Publication 2006-59014.

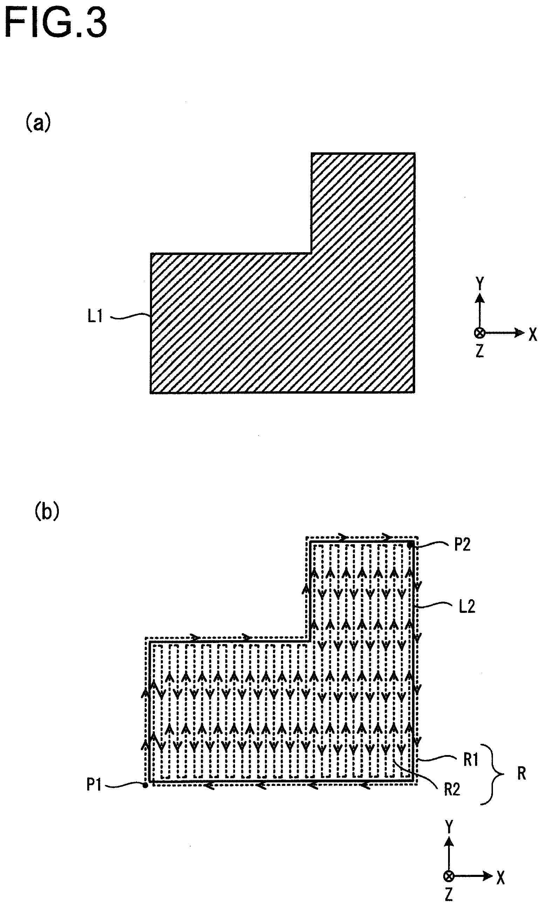

An example of the scanning path is schematically shown in Fig. 3. Fig. 3(a) shows layer model information for the three dimensional shaped object corresponding to the current Z axis position of the vertically moving stage 13. And the outline thereof is schematically shown as the surrounding line L1. Moreover, Fig. 3(b) shows the scanning path R that is traced on the basis of the surrounding line L1 shown in Fig. 3(a). The control device 17 converts the coordinates of the surrounding line L1 in the layer model information into XY coordinates for the material layer, and calculates a surrounding line L2 on the surface of the material layer. The scanning path R may be, for example, created so that, after the laser beam has scanned along the surrounding line L2, it scans the region internal to the surrounding line L2. In Fig. 3(b), an example is shown in which a path R1 (shown by a broken line in Fig. 3(b)) that starts from some point P1 on the surrounding line L2 and progresses around the surrounding line L2, or along a line that is positioned just a predetermined distance outward from the surrounding line L2, and comes back to the point P1 again, and a path R2 (also shown by a broken line in Fig. 3(b)) that progresses from the point P1 to and fro within the region surrounded by the surrounding line L2 and then arrives at a point P2, are created and are taken as the scanning path R. By employing this type of scanning path R, first the outline of the three dimensional shaped object in the material layer, in other words the portion of that layer that will become the outer surface of the three dimensional shaped object, is hardened by irradiation with the laser beam, and subsequently the portion that will become the interior of the three dimensional shaped object is hardened by irradiation with the laser beam. As a result, a single solidified layer of the three dimensional object in which a plurality of solidified layers are to be built up together is manufactured, and is joined to the solidified layers that have previously been manufactured.

The state of hardening of the solidified layer that has thus been manufactured by the laser beam irradiation processing is inspected by the inspecting unit 16 (this is an "inspecting process"). In this inspecting process, as described above, outline shape data and surface shape data related to the surface shape of the solidified layer are detected by the three dimensional shape measurement device 161, and internal data related to the internal state of the solidified layer is detected by the X-ray inspecting device 162. And the analysis unit 171 of the control device 17 analyzes the state of the solidified layer by using the inspecting results that have been obtained via the inspecting process, and the decision unit 172 decides whether or not the next material layer and solidified layer should be manufactured (this is a "decision process"). In other words, according to the results of analysis of the shape, the surface state, the internal structure and so on of the solidified layer, the decision unit 172 makes a decision as to whether to perform the forming of the next material layer and the manufacturing of the next solidified layer (i.e., forming and manufacturing of the next layer), to perform forming and manufacturing of the next layer after having performed correction processing upon this solidified layer, or to change the manufacturing conditions, or not to perform forming or manufacturing of the next layer (i.e. to terminate forming and manufacturing). The manufacturing conditions described above include the irradiation conditions for irradiating the laser beam upon the material layer, the temperature to which the powder material should be preheated, the supply of the powder material, and so on. It should be understood that the details of the analysis of the state of the solidified layer and the details of the decision process will be described hereinafter.

If the result of the analysis is that no serious error or defect is included in the solidified layer, then the decision unit 172 determines upon forming and manufacturing of the next layer, and the manufacturing apparatus 1 performs the material layer forming process described above, and forms a new material layer upon the upper portion of the solidified layer. Then the manufacturing apparatus 1 performs the laser beam irradiation process, the inspecting process, and the decision process upon this new material layer for a second time. However, if the result of the analysis is that an error or a defect of a level that is capable of being corrected is present in the solidified layer, then a decision is reached by the decision unit 172 to perform forming and manufacturing of the next layer after having performed correction processing upon this solidified layer. In this case, after having performed a correction process that will be described hereinafter, the manufacturing apparatus 1 performs the inspecting process and the decision process for a second time upon the solidified layer upon which the correction process has been performed. According to the decision result in this decision process, the manufacturing apparatus 1 then either performs forming and manufacturing of the next layer, or performs correction processing for a second time. It should be noted that, in the cases described above, the decision unit 172 may decide to perform change of the manufacturing conditions at the performing the forming and manufacturing of the next layer, according to the level of the error or defect that has been analyzed. But if the result of the analysis by the analysis unit 171 is that an error or a defect of a level that cannot be corrected is present in the solidified layer, then a decision is reached by the decision unit 172 to stop the additive manufacturing of this three dimensional shaped object. In this case, the manufacturing apparatus 1 does not perform any subsequent processing. By repeatedly performing the processes described above, the manufacturing apparatus 1 manufactures a three dimensional shaped object in which a plurality of solidified layers in which no serious errors or defects are included are built up together.

In other words, the manufacturing apparatus 1 supplies the material for the additive manufacturing layered upon the solidified layer that has already been processed to become solidified, and manufactures a solidified layer, which is layered, by performing solidification processing upon this material layer that has been formed by supplying material layered. And the manufacturing apparatus 1 manufactures a three dimensional shaped object in which a plurality of solidified layers are built up together by repeating the additive manufacturing of a solidified layer by performing solidification processing upon this new material layer that has been formed on top of the solidified layer that is layered. And, before forming a new material layer upon the solidified layer, the manufacturing apparatus 1 inspects the state of hardening of the solidified layer with the inspecting unit 16.

Next, the analysis of the state of the solidified layer using the inspecting results and the decision process will be explained. It should be understood that the following explanation will be separated into an explanation of the analysis and decision process for the outline of the solidified layer, an explanation of the analysis and decision process for the surface of the solidified layer, an explanation of the analysis and decision process for the boundary interface between solidified layers, and an explanation of the analysis and decision process for the interior state of the solidified layer.

### (1) The analysis processing and the decision processing for the outline of the solidified layer

The analysis unit 171 compares the outline shape data outputted from the inspecting unit 16 with the design information, or the shape information that is assumed from the design information at the temperature of solidification. And the analysis unit 171 calculates the error of the outline of the solidified layer indicated by the outline shape data with respect to the surrounding line L1 in the layer data information indicated by the design information. If the error calculated by the analysis unit 171 is within the allowed tolerance range, then the decision unit 172 decides that it is possible to form and manufacture the next layer without changing the manufacturing conditions.

In the outline of the solidified layer, a region in which, although the calculated error exceeds the tolerance range, the outline of the solidified layer is larger than the surrounding line L1 in the design information is termed an "error region". It is possible to correct the outline of the solidified layer to match the surrounding line L1 specified by the design information by cutting away this error region with the cutting unit 15. Accordingly, in this case, the decision unit 172 decides that, although a correction process is required, it is possible to form and manufacture the next layer without altering the manufacturing conditions. If it has been decided that such a correction process is required, then the amount of error calculated by the analysis unit 171 and the position of the error region in the solidified layer are stored in the storage unit 180 as correction processing data. But if it is analyzed by the analysis unit 171 that the outline of the solidified layer is smaller as compared with the surrounding line L1 in the design information to an extent beyond the tolerance range, then the decision unit 172 considers that correction of the solidified layer is not possible, and decides to stop the additive manufacturing. However it should be understood that it would also be acceptable to perform correction by forming a material layer for a second time at the position on the material layer where the error has occurred, and to harden this material layer by irradiation with the laser beam, if the error toward the small side is outside the tolerance range and the value of the error is less than a predetermined value,.

If it has been decided that correction processing is required, then the control device 17 performs correction processing upon the solidified layer with the cutting unit 15. The cutting unit 15 reads out the correction processing data stored in the storage unit 180, and cuts away the amount of the error from the solidified layer at the position of the error region on the solidified layer. The inspecting process described above is then performed for a second time upon the solidified layer that has been subjected to correction processing, and analysis processing and decision processing are again performed on the basis of the results of inspecting. In other words, the correction processing, the inspecting processing, and the decision processing are repeated until the error of the solidified layer comes within the tolerance range.

It should be understood that it would also be acceptable not to perform the correction processing each time a solidified layer is manufactured; it would also be possible to perform correction processing upon solidified layer or solidified layers that require correction processing after having built up a predetermined number of solidified layers, or after having manufactured the entire shape of the three dimensional shaped object. In this case, the correction processing data stored in the storage unit 180 will include information relating to the positions of errors and relating to the amounts of errors and relating to which layers these errors are present in, and the cutting unit 15 will perform correction processing on the basis of this information.

### (2) The analysis processing and the decision processing for the surface of the solidified layer

The analysis unit 171 compares the surface shape data outputted from the inspecting unit 16 with the additive manufacturing possible/not possible data or the design information. And, on the basis of the surface shape data, the analysis unit 17 detects the presence or absence of convex portions, concave portions, empty holes that are blocked up, or open holes (hereinafter collectively referred to as "defect holes") on the surface of the solidified layer that are not present in the design information. When a defect hole or a convex portion has been detected on the surface of the solidified layer, the analysis unit 171 makes a decision as to whether or not the position of this defect hole that has been detected is exterior to the surrounding line L1 specified by the design information. If the position of the defect hole is interior to the surrounding line L1, then the analysis unit 171 performs analysis of the shape of this defect hole that has been detected and the position of occurrence of the defect hole. Features of the defect hole that are analyzed are, for example, the size of the defect hole, the cross sectional shape of the defect hole, the depth of the defect hole, and so on. Moreover, additionally, the analysis unit 171 also performs analysis of the state of roughness of the surface of the solidified layer, on the basis of roughness information for that surface (for example, information specifying the maximum difference in elevation related to roughness and spatial frequency information for the roughness of the surface and so on).

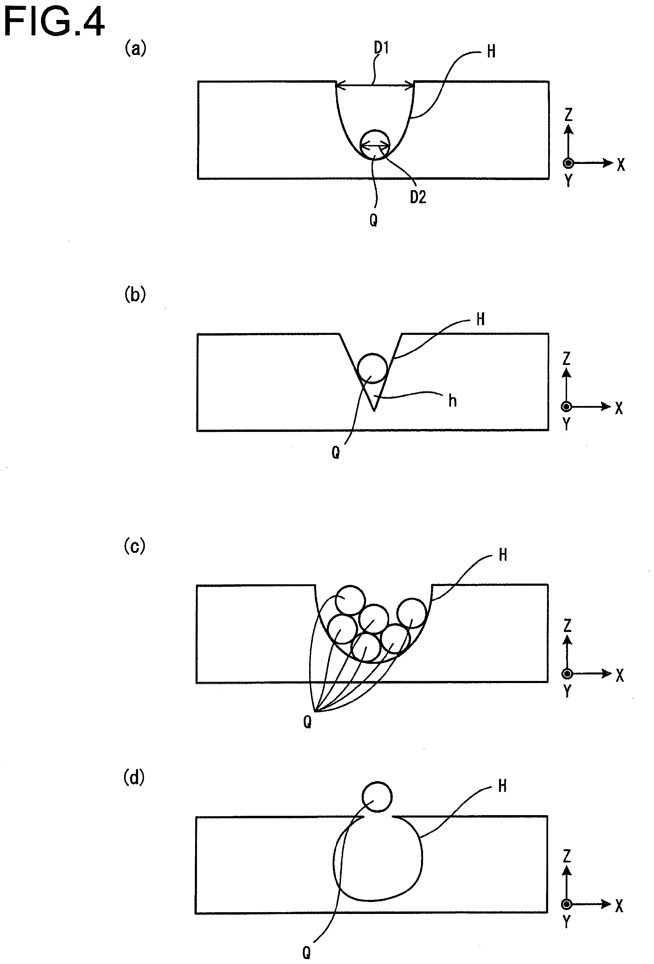

As shown in the sectional view of the solidified layer in Fig. 4(a), if the size of a defect hole H in the surface of the solidified layer (i.e. an open hole diameter D1) is greater than the particle diameter D2 of the powder material Q, then it is possible for the powder material Q that is supplied during the forming of the next layer to enter into this defect hole H. Accordingly, it is possible to fill up the defect hole H and thereby implement correction by performing laser beam irradiation processing upon the next material layer that is formed. However, even in this case in which the diameter of the open defect hole H in the surface of the solidified layer is larger than the particle diameter of the powder material Q, if the size of the defect hole H becomes smaller as the distance in the cross sectional direction increases, sometimes the powder material Q that is supplied during the forming of the next layer does not arrive at the bottom of the defect hole H. For example if, as shown in Fig. 4(b), the cross section of the defect hole H has a letter-V shape, in other words if the size of the bottom portion of the defect hole H is smaller than the particle diameter of the powder material Q, then a cavity h occurs between the powder material Q and the bottom portion of the defect hole H. In this state it is not possible to correct the cavity h, even if laser beam irradiation processing is performed after having supplied new powder material Q onto the solidified layer that has the defect hole H. Furthermore, if the defect hole H is deep as shown in Fig. 4(c), then there is a danger that it will not be possible to fill up the defect hole H perfectly if the amount of powder material Q that is supplied during the forming of the next layer is not sufficient. Moreover it is also a question to be decided whether or not the powder that is supplied onto the solidified layer can be sufficiently sintered with the solidified layer that has already been manufactured in accordance with information about the roughness of the solidified layer and so on.

In consideration of the points described above, the analysis unit 171 performs analysis as to whether or not the size of the defect hole H at the surface and the size of its bottom portion are greater than predetermined values, as to whether or not the depth of the defect hole H is greater than a predetermined value, as to the state of roughness, and so on. It should be understood that it is desirable for these predetermined values to be values that are determined on the basis of the particle diameter of the powder material Q. If the analysis by the analysis unit 171 determines that the size of the defect hole H is greater than the predetermined value and moreover that the depth of the defect hole H is less than or equal to the predetermined value, then the decision unit 172 may decide that it is possible to fill up the defect hole H with the powder material Q that is supplied during the forming of the next layer, so that it is possible to form and manufacture the next layer. But if the analysis by the analysis unit 171 determines that the size of the defect hole H is less than or equal to the predetermined value, or that the depth of the defect hole H is greater than the predetermined value, or that the roughness state greatly deviates from the permitted roughness state, then the decision unit 172 may decide that the manufacturing conditions should be changed for performing to form and manufacture the next layer.

An example of change of the manufacturing conditions will now be given.

For example, if the defect hole H is large or the defect hole H is deep, then it is necessary for a large amount of the powder material Q to enter into the defect hole H in order to fill up the defect hole H. In this case, in relation to the manufacturing conditions, the change unit 173 should increase the amount of the powder material Q that is supplied, which is a manufacturing condition for when the next layer is formed and manufactured. In order to increase the amount of the powder material Q that is supplied, it will be sufficient, for example, to reduce the speed of movement of the re-coater 12, or to increase the number of times that the powder material Q is supplied by the re-coater 12.

In order reliably to harden the powder material Q that has entered into the defect hole H as described above, it is necessary to increase the amount of irradiation by the laser beam upon the next material layer, at least at the site where the next layer is formed above the defect hole H. In this case, as a condition for irradiation of the laser beam, which is a manufacturing condition, in other words as a solidification processing condition, it will be sufficient, for example, for the change unit 173 to change the scanning path R of the laser beam from the irradiation unit 14, to reduce the scanning speed of the laser beam, or to increase the intensity of the laser beam. Accordingly it is possible to perform solidification by operating the laser beam even upon the powder material Q that has entered into the defect hole H, since it is possible to increase the amount of irradiation of the laser beam upon the vicinity of the defect hole H. As a result, it is possible to correct the defect hole H when performing the material layer forming processing and the laser beam irradiation processing for the next layer.

It should be understood that, if the irradiation unit 14 is irradiating an electron beam, then, as a solidification processing condition, the change unit 173 may, for example, change the degree of vacuum of the atmosphere through which the electron beam passes.

In order to prevent occurrence of the same type of defect holes H in the next solidified layer when laser beam irradiation processing is performed upon the next material layer, it will also be acceptable, as a manufacturing condition, to change the amount of the powder material Q that is supplied. In this case, the amount of the powder material Q that is supplied is reduced, so that the thickness Δd of the material layer that is formed during the forming of the next layer becomes a smaller value. By reducing the thickness Δd of the material layer (in other words, by making the thickness of the material layer thinner), it is possible to increase the efficiency by which heat due to the laser beam that is being irradiated from the irradiation unit 14 is conducted to the material layer, so that it is possible to suppress the occurrence of uneven solidification. As a result, it is possible to suppress the generation of defect holes H in the solidified layers that are manufactured during the processing of the next and subsequent layers.

It should be understood that while, in the example described above, a case has been explained in which the manufacturing conditions were changed according to the characteristics of a single defect hole H, it would also be possible to change the manufacturing conditions according to the position of the defect hole H in the solidified layer (in other words, according to its positional relationship with the outline), according to its positional relationship with other defect holes that are present in the vicinity, according to the number or size of other defect holes that are present in the vicinity, according to the distribution of occurrence of the defect holes H, or the like. For example, if a large number of defect holes are present in the neighborhood of the defect hole H, then it will be acceptable to reduce the shifting speed of the re-coater 12 as described above so as to reduce the speed at which the powder material Q is supplied to the region where solidification processing is to be performed, or to increase the about of the powder material Q that is supplied when forming the next layer by increasing the number of times that the powder material Q is supplied by the re-coater 12 for one process of hardening,.

If the analysis shows that the size of the defect hole H is greater than the predetermined value, but that the difference from the particle diameter of the powder material Q is relatively small, then the manufacturing conditions may be changed. For example, as shown in Fig. 4(d), the manufacturing conditions may be changed if the size of the defect hole H and the particle diameter of the powder material Q are approximately equal. In this type of case, since it is difficult for the powder material Q that is supplied during the forming of the next layer to enter into the defect hole H, accordingly the powder material Q is reliably caused to enter into the defect hole H by reducing the speed of shifting of the re-coater 12 and/or by increasing the number of times that the powder material Q is supplied by the re-coater 12. Furthermore, it would also be acceptable to arrange, at the position where the powder material Q enters into the defect hole H, to increase the intensity of the laser light, and/or to change the angular velocity at which the Galvano mirror unit 142 is deflected by reducing the scanning speed of the laser light during the laser irradiation so that the powder material Q that has entered into the defect hole H can be sufficiently hardened, and/or to control the output of the laser light source 141.

As a change in the manufacturing conditions, it would also be acceptable to arrange to supply powder material Q having a different particle diameter when forming the next layer. For example, in a case like that shown in Fig. 4(b), it would be possible to cause the powder material Q to enter more toward the bottom portion of the defect hole H when forming the next layer by supplying a powder material Q whose particle diameter is smaller. Even in a case in which the size of the defect hole H and the particle diameter of the powder material Q are substantially equal, by supplying a powder material Q whose particle diameter is smaller, it becomes possible to make the powder material Q enter into the defect hole H more reliably. It should be understood that, if the next layer is formed using a powder material Q whose particle diameter is different, it is desirable also to change the intensity of the laser beam irradiation by the irradiation unit 14 and/or the scanning speed of the laser light and so on, according to the particle diameter of the powder material Q after the change.

In the case of changing the manufacturing conditions in which a change is made to a powder material Q having a different particle diameter, for example, a notification may be issued via audio that change should be made to the powder material Q having the different particle diameter, so as to request the user to exchange the material supply tank 11 for a material supply tank containing the powder material Q having the different particle diameter. Alternatively, it would also be acceptable to provide the manufacturing apparatus 1 with a plurality of material supply tanks 11 containing powder materials Q of mutually different powder diameters, and to build the manufacturing apparatus so that each of these material supply tanks 11 can be shifted to below the re-coater 12 (i.e. to its -Z axis side) by a drive unit not shown in the figures. In this case, if it has been decided by the decision unit 172 that a change should be made to a powder material Q having a different particle diameter, then the material supply tank that contains the powder material Q having a particle diameter that is appropriate, on the basis of the result of analysis by the analysis unit 171, for forming the next layer may be shifted so that it is positioned below the re-coater 12.

In the explanation given above, it was arranged for the predetermined value to which the size of the defect hole H was compared to be determined on the basis of the particle diameter of the powder material Q, but this should not be considered as being limitative of the present invention. For example, it would be possible to determine the size of a defect hole H for which correction by HIP (Hot Isostatic Pressing) processing on the manufactured object when it has been completed becomes impossible, as being the predetermined value.

### (3) The analysis and decision process for the boundary interface between solidified layers

The analysis unit 171 compares the internal data outputted from the X-ray inspecting device 162 of the inspecting unit 16 with the design information. And the analysis unit 117 detects the presence or absence of defect holes H generated in the solidified layer on its +Z axis side which cannot be measured by the three dimensional shape measurement device 161. When a defect hole H of this type is detected on the +Z axis side of the solidified layer, then the decision unit 172 decides that it is necessary to change the manufacturing conditions during the forming of the next layer. As a change of the manufacturing conditions in this case, the change unit 173 reduces the supply of the powder material Q, so that the thickness Δd of the material layer during the forming of the next layer has a smaller value. In this case, the change unit 173 reduces the supply amount of the powder material Q according to the shapes of the defect holes H that are detected, their sizes, the number of the defect holes H, and so on. Furthermore, along with reducing the thickness Δd of the material layer, the change unit 173 also may change the scanning path R of the laser beam from the irradiation unit 14, may reduce the scanning speed of the laser beam, and/or may increase the intensity of the laser beam. As a result, it is possible to increase the efficiency when heat is transmitted to the material layer by the laser beam irradiated from the irradiation unit 14, it is possible to suppress the generation of unevenness during hardening, and it is possible to suppress the occurrence of defect holes H during hardening of the next and subsequent layers.

It should be understood that, in order further to enhance the efficiency of conduction of heat to the powder material Q during the laser beam irradiation, it would also be acceptable to increase a preheating temperature for the powder material Q stored in the material supply tank 11.

### (4) The analysis and decision process for the interior state of the solidified layer

The analysis unit 171 performs analysis of the composition, the crystalline distribution, the stress distribution and so on of the solidified layer by employing the internal data outputted from the X-ray inspecting device 162 of the inspecting unit 16. In this case, the analysis unit 171 calculates the absorption coeffcient of the solidified layer from the intensity of the transmitted X-rays that are transmitted through the solidified layer, using detection data (i.e., projection data) outputted from the detector 202 of the X-ray measurement device 162. The analysis unit 171 compares the absorption coefficient that has been calculated with the absorption coefficient in the case of normal solidification, and detects whether or not the difference is within a predetermined range. If the result of the analysis is that the difference is within the predetermined range, then the decision unit 172 decides that the interior of the solidified layer has undergone adequate hardening, and decides that it is possible to perform to form and manufacture the next layer.

However, if the result of the analysis is that the difference that is calculated is beyond the predetermined range, then the decision unit 172 decides that the interior of the solidified layer has not undergone adequate hardening, and decides that correction processing should be performed. For example, if the density of the solidified layer is low, in other words if the level of solidification of the solidified layer is insufficient, then heat may be applied to the solidified layer by performing irradiation with the laser beam from the irradiation unit 14 for a second time, which promotes hardening, and thus the density of the solidified layer is increased. Furthermore, the decision unit 172 decides to change the manufacturing conditions during the forming and the additive manufacturing of the next layer. According to the magnitude of the difference that is calculated, the change unit 173 may, for example, change the thickness of the material layer that is formed during the forming of the next layer, may change the scanning path R of the laser beam from the irradiation unit 14, may change the scanning speed of the laser beam, may change the intensity of the laser beam, or the like. Since, as a result, it is possible to maintain a state in which the stresses are substantially uniform for each of the solidified layers that are built up together, accordingly it is possible to suppress reduction of the strength of the three dimensional shaped object that is finally manufactured.

It should be understood that it would also be acceptable, if the difference that is calculated by the analysis unit 171 deviates greatly from the predetermined range, for the decision unit 172 to consider the process of correcting the solidified layer to be impossible, and to decide to terminate the additive manufacturing process.

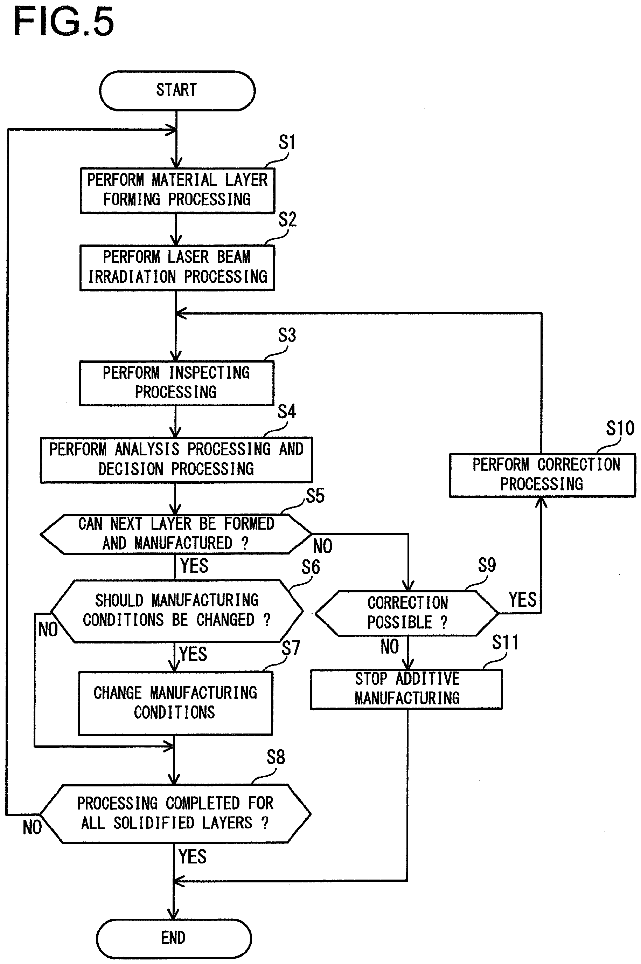

The operation of the manufacturing apparatus 1 according to this embodiment will now be explained with reference to the flow chart of Fig. 5. The processing shown in Fig. 5 is performed by a program being executed by the control device 17. This program is stored in a memory of the control device 17 not shown in the figures, and is started and executed by the control device 17.

In step S1, the material layer forming process in which the powder material Q held in the material supply tank 11 is supplied onto the vertically moving stage 13 by the re-coater 12 is performed, and then the flow of control proceeds to step S2. In this step S2, the laser irradiation process in which a solidified layer is manufactured by hardening the powder material Q of the material layer by irradiating the laser beam upon the material layer with the irradiation unit 14 is performed, and then the flow of control proceeds to step S3.

In this step S3, the inspecting process in which detection of outline shape data, surface shape data, and internal data related to the solidified layer is performed by the inspecting unit 16 is performed, and then the flow of control proceeds to step S4. In this step S4, the analysis unit 171 performs analysis of the state of the solidified layer by comparing the outline shape data, the surface shape data, and the internal data that have thus been detected by the inspecting unit 16 with the design information, and then the decision unit 172 performs the decision process on the basis of this analysis by the analysis unit 171, and the flow of control proceeds to step S5.

In this step S5, a decision is made by the decision unit 172 as to whether or not it is possible to form and manufacture the next layer. If it is decided that it is possible to form and manufacture the next layer, then an affirmative result is reached in step S5 and the flow of control proceeds to step S6. But if it is decided that it is not possible to form or manufacture the next layer, then a negative decision is reached in step S5 and the flow of control is transferred to step S9 that will be described hereinafter. In step S8, a decision is made by the decision unit 172 as to whether or not it is necessary to change the manufacturing conditions. If it is decided that it is necessary to change the manufacturing conditions, then an affirmative result is reached in step S6 and the flow of control proceeds to step S7. In this step S7, the change unit 173 changes the manufacturing conditions according to the result of analysis of the solidified layer by the analysis unit 171 in step S4, and then the flow of control proceeds to step S8. But if it is decided that it is not necessary to change the manufacturing conditions, then a negative result is reached in step S6 and the flow of control proceeds to step S8. In this step S8, a decision is made as to whether or not processing has been completed for all of the solidified layers. If processing has been completed for all of the solidified layers, then an affirmative result is reached in step S8 and processing terminates. But if it is necessary to additive manufacture one or more further solidified layers, then a negative result is reached in step S8, and the flow of control returns to step S1.

If a negative result is reached in step S5, then the flow of control is transferred to step S9, and a decision is made by the decision unit 172 as to whether or not correction by the correction process can be performed. If it is decided that correction is possible, then an affirmative result is reached in step S9 and the flow of control proceeds to step S10. In this step S10, according to the results of analysis by the analysis unit 171, the correction process is performed upon the solidified layer by the irradiation unit 14 and/or the cutting unit 15, and then the flow of control returns to step S3. But if it is decided that correction is not possible, then a negative result is reached in step S9 and the flow of control is transferred to step S11. In this step S11, the additive manufacturing of the three dimensional shaped object is stopped, and then processing terminates.

It should be understood that it would also be acceptable for the results of the inspects by the inspecting unit 16 that are performed upon the solidified layers during the additive manufacturing of the manufactured object all to be stored in the storage unit 180, and for the analysis unit 171 to perform analysis of the three dimensional shaped object after manufacture thereof has been completed. In this case, it would also be possible for the analysis unit 171 to analyze how the size of defects such as cavities and so on that occur in the interior of the solidified layer during the additive manufacturing process changes. Alternatively, if a plurality of three dimensional shaped objects of the same shape are being manufactured by the manufacturing apparatus 1, the analysis unit 171 may compare the defects such as internal cavities and so on in the n-th three dimensional shaped object that has been manufactured with the defects such as internal cavities and so on in the (n+1)-th three dimensional shaped object that has been manufactured, and may analyze how the sizes of the defects, their shapes, their numbers, the positions in which they occur and their distributions and so on change. In other words, it would also be acceptable for the analysis unit 171 to analyze the change over time of the tendency for occurrence of defects. If on the basis of the results of analysis by the analysis unit 171, for example, there is a tendency for the size of the defects to increase, if there is a tendency for the number of defects to increase, or if there is a tendency for the positions where the defects occur to come in positions where it is difficult to correct them by a processing device that performs processing of the three dimensional shaped object after the additive manufacturing (for example HIP processing, melt infiltration processing, impregnation processing or the like), then the decision unit 172 may decide to change the manufacturing conditions for the next one of the three dimensional shaped objects to be manufactured.

According to the first embodiment of the present invention described above, the following effects are obtained.
(1) During the additive manufacturing of the three dimensional shaped object, the inspecting unit 16 inspects the state of the solidified layer that has now been manufactured upon the previously solidified built up layers. In this case, the inspecting unit 16 inspects the state of the solidified layer that is layered before forming a new material layer of the built up structure upon the upper portion of that solidified layer. Therefore, since it is possible to inspect the state of the solidified layers of the three dimensional shaped object during the additive manufacturing, and since it is thus possible to check whether the shaped object that is being manufactured will have sufficient strength as a manufactured product, in other words since it is possible to manufacture the three dimensional shaped object while confirming that the possibility that it has a serious defect as a manufactured product is low, accordingly it is possible to ensure the product quality of the completed three dimensional shaped object. Furthermore, unlike the case of only performing inspecting at the time point that the additive manufacturing of the three dimensional shaped object has been completed, and thereby only discovering a defect so serious that the three dimensional shaped object becomes defective at that late time point, it is possible to enhance the manufacturing efficiency, since the expenditure of time spent on manufacturing a useless product is avoided. In particular, inspecting either for each single layer or for each set of a plurality of layers is performed each time a solidified layer is manufactured, so that correction processing can be performed before manufacturing the next solidified layer. Due to this, it is possible to manufacture an accurate shape, even in a case such as manufacturing a solidified layer having different dimensions, such as manufacturing a hollow shape like a vase that has a narrow aperture and is wide in its middle portion. It should be understood that the inspecting process may be implemented for one layer at a time, or for a plurality of layers at a time. Moreover, it would also be acceptable to change the interval between successive inspecting processes during manufacturing object. In particular, it would be possible to change the interval between successive inspecting processes at a timing as the manufacturing conditions of the material layers or the hardening conditions of the solidified layers are changed. In particular, the interval between inspecting processes may be changed when the powder material to be used are changed. Yet further, it will be acceptable to perform an inspecting process for each layer individually in the case of manufacturing a part of the three dimensional shaped object for which the shape correction would become difficult after completion, such as for example a grooved portion or the like, while implementing inspecting processing for a plurality of layers together for portions for which the shape correction after completion is easy.
(2) On the basis of the results of inspecting of the solidified layer, which is layered, by the inspecting unit 16, the change unit 173 changes at least one of the manufacturing conditions when forming the new material layer, and the solidification processing conditions when performing solidification processing upon the new material layer. Since it is thus possible to change conditions of various types when forming and manufacturing the next layer according to the state of defects created in the solidified layer during the additive manufacturing and so on, accordingly it is possible to correct defects that occur in the solidified layer and to avoid the generation of defects in the next and subsequent layers, and it is therefore possible to manufacture a three dimensional shaped object having high product quality.
(3) As a manufacturing condition during the forming of the new material layer, the change unit 173 changes at least one of the amount of supply of powder material for forming the new material layer, in other words the speed of supply of the powder material that is supplied during the forming of the next layer, the thickness of the material layer for the next layer, and the number of times that powder material is supplied for the material layer for the next layer. Thus, according to defect holes that are generated in the solidified layer, powder material is supplied in a manner that is appropriate for correcting defect holes in the solidified layer and/or for avoiding the occurrence of defect holes during the additive manufacturing of the next layer, and accordingly it becomes possible to manufacture a three dimensional shaped object having high product quality.
(4) The change unit 173 changes the amount of powder material according to at least one of the shape and the size of the defect hole upon the surface of the solidified layer that is layered detected by the inspecting unit 16. Accordingly, it is possible to correct a defect hole generated in the solidified layer by filling it in with the powder material supplied during the forming of the next layer. It will be understood that this makes a contribution to shortening of the time period required for the additive manufacturing, because it is possible to perform the forming and the additive manufacturing of the next layer and the correction of the defect hole at the same timing.
(5) If a plurality of defect holes have been detected by the inspecting unit 16 on the surface of the solidified layer that is layered, then the change unit 173 changes the amount of powder material according to the shape and size of each of the defect holes and the positional relationships of the plurality of defect holes. Accordingly, it is possible reliably to correct defect holes and to ensure the product quality of the three dimensional shaped object, since it is possible to supply the powder material in an amount that is appropriate for correcting the defect holes, according to the states in which the defect holes occur.
(6) The change unit 173 changes the amount of the powder material according to the defect holes detected by the inspecting unit 16 in the interior of the solidified layer that is layered. In other words, the change unit 173 changes the amount of the powder material so as to make the thickness of the new layer of material thinner, according to the shapes, the sizes, and the number of the defect holes that have been detected in the interior of the solidified layer that is layered. Therefore, the solidification processing conditions at the time of additive manufacturing of the next layer are changed due to the defect holes in the interior of the solidified layer that were generated because of hardening during the solidification processing being insufficient, so that, as a result of the solidification processing of the next and subsequent layers, it is possible to avoid the generation of defect holes that originate due to improper solidification.
(7) The change unit 173 changes the solidification processing conditions according to the changed amount of the powder material to be supplied. That is, according to increase of the amount of changed supply of the powder material, the change unit 173 changes at least one of the scanning path R, the scanning speed, and/or the intensity of the energy beam such as a laser beam or an electron beam or the like that is irradiated by the irradiation unit 14. Accordingly it is possible to supply sufficient energy for hardening to the increased amount of powder material in order to fill up the defect holes in the surface of the solidified layer, so that it becomes possible to suppress the generation of defect holes during the additive manufacturing of the next layer.
(8) The changing unit 173 changes the solidification processing conditions according to the state of the composition of the solidified layer that is layered detected by the inspecting unit 16. In other words, the change unit 173 performs change of the scanning path R of the energy beam for additive manufacturing of the next layer, change of the scanning speed of the energy beam, and change of the intensity of the energy beam. As a result, it is possible to prevent decrease of the strength of the three dimensional shaped object that is finally manufactured, since it is possible to maintain a state in which the stresses are kept substantially uniform for each of the solidified layers that are built up together.
(9) If it is found that one or more defect holes are included in the solidified layer that is layered when the design information for the three dimensional shaped object is compared with the solidified layer that is layered inspected by the inspecting unit 16, then the change unit 173 changes the manufacturing conditions. Accordingly, it is possible to manufacture a three dimensional shaped object on the basis of the design information with good accuracy.
(10) On the basis of the results of inspecting of the solidified layer, which is layered, by the inspecting unit 16, the decision unit 172 makes a decision as to whether or not to form a new material layer. In other words, if one or more defect holes are found in the solidified layer that is layered when the design information for the three dimensional shaped object is compared with the solidified layer, which is layered, that has been inspected by the inspecting unit 16, then, according to the state of these defect holes, the decision unit 172 makes a decision as to whether to form a new material layer, or to stop the additive manufacturing of the three dimensional shaped object. Accordingly, by stopping the additive manufacturing of a three dimensional shaped object in which serious defects as a manufactured product would be included, the waste of time and of material involved in the additive manufacturing of a defective product are avoided, and this contributes to a reduction of the cost for additive manufacturing of the three dimensional shaped object.
(11) The decision unit 172 makes a decision as to whether or not a defect hole can be corrected, and, if it can be corrected, makes a decision as to whether it is possible to form and manufacture the next layer. Accordingly, it is possible to determine whether or not the next layer should be manufactured in an appropriate manner, depending upon the state of occurrence of defect holes.
(12) When it has been determined by the decision unit 172 that correction is possible, the additive manufacturing unit 10 forms a new material layer after having performed correction processing with the cutting unit 15. In this case if there is a portion for which the error is greater than a predetermined value upon comparison of the outline shape L2 of the solidified layer, which is layered, with the outline shape L1 in the design information for the three dimensional shaped object, then the cutting unit 15 cuts away this erroneous portion. Accordingly, it is possible to manufacture a three dimensional shaped object having an external shape that conforms to the design information.

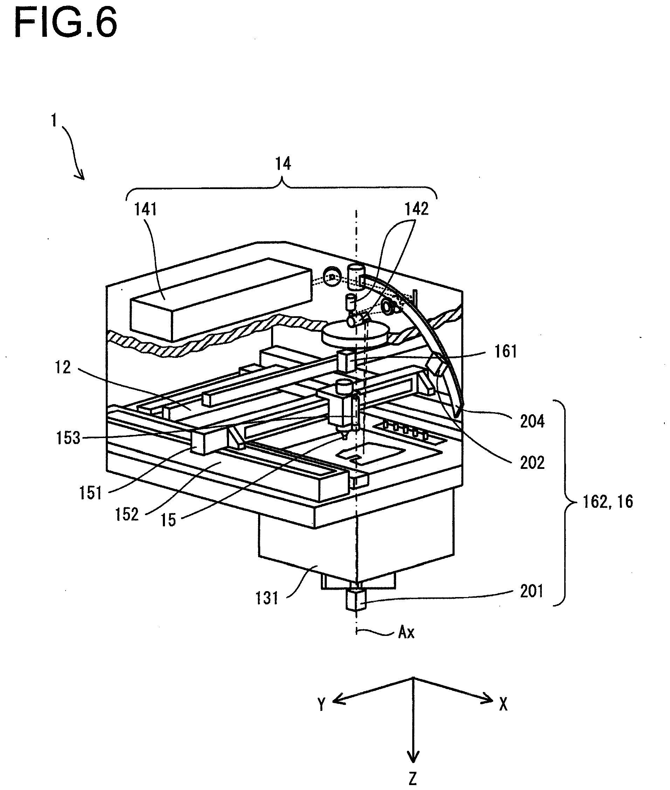

Variations such as the following also come within the scope of the present invention; and it would also be possible to combine one or a plurality of these variant embodiments with the embodiment described above.
(1) It would also be acceptable to change the processing method that is performed for solidification processing by, rather than forming the material layer with a re-coater or the like upon the solidified layer that has already been manufactured, instead blowing the powder material at a region which is set according to the shape of the three dimensional shaped object that is to be manufactured, while simultaneously irradiating a beam of laser light or an electron beam thereupon. In this case, the forming process for the "material layer made from the material" would correspond to the processing of blowing the powder material.
(2) Instead of performing inspecting with the inspecting unit 16 each time a solidified layer is manufactured, it would also be acceptable to perform inspecting with the inspecting unit 16 each time a plurality of solidified layers are manufactured. Moreover if, on the basis of the results of inspecting performed a plurality of times with the inspecting unit 16 each time a solidified layer was manufactured, no serious defect has occurred in the solidified layers that have already been manufactured, then it will also be acceptable to change the inspecting by the inspecting unit 16 so that it is only performed each time a plurality of solidified layers are manufactured.
(3) A configuration would also be acceptable in which the X-ray source 201 of the X-ray inspecting device 162 is fixed to the vertically moving stage 13, and the detector 202 is disposed so as to be rotatable with respect to the vertically moving stage 13. The structure of the manufacturing apparatus 1 in this case is shown in Fig. 6. The X-ray source 201 is arranged below the vertically moving stage 13 (i.e. on its +Z axis side) so that the point of emission of the X-rays is positioned upon the rotation axis Ax. The detector 202 is provided so as to be shiftable along a guide rail 204 along a circular arcuate line from the rotation axis Ax at the upper portion of the irradiation unit 14 (i.e. at its -Z axis side). This guide rail is rotated around the rotation axis Ax by a drive unit such as a motor or the like (not shown in the figures). In other words, by being shifted along the guide rail that rotates around the rotation axis Ax as a center, the detector 202 is capable of detecting X-rays from various directions that have been emitted from the X-ray source 201 and that have passed through the vertically moving stage 13 and the solidified layers. Moreover it is also possible to acquire the layer shape of any desired one of the solidified layers by acquiring projection images from various directions while rotating the detector 202 and by reconstruction from these projection images using a per se known laminography technique. This is particularly effective when inspecting in real time the state of bonding between a layer upon which solidification processing is being implemented by irradiation with the laser beam or the like and the layer below it.
(4) Instead of the X-ray inspecting device 162, it would also be acceptable to employ a gamma ray inspecting device that detects internal data relating to the solidified layers by using gamma rays that have passed through the solidified layers. Moreover, it would also be possible to employ an ultrasonic echo flaw detection device that outputs an ultrasonic pulse through the solidified layers and that detects internal defects or the like from the time delay TOF (Time Of Light) of the reflected echoes. Furthermore, it would also be possible to employ a diffraction inspecting device that detects defects or the like internal to the solidified layers by detecting the diffraction angles when X-rays, gamma rays, or infrared rays that are irradiated at the solidified layers and pass through the solidified layers are diffracted by internal defects or the like.
(5) It would also be possible to provide the manufacturing apparatus 1 in a predetermined working chamber that can be isolated from the exterior, and to perform manufacture of the three dimensional shaped object in this working chamber. In this case, the working chamber may be equipped with an exhaust device that exhausts its interior, and spatter that is scattered during irradiation with the laser beam during the additive manufacturing of the solidified layers may be retrieved by the exhaust device to a debris retrieval device that is provided outside the working chamber. As a result, along with it becoming possible to manufacture an additive manufactured object of high product quality while protecting the three dimensional shaped object that is being manufactured and the manufacturing apparatus 1 from scattered debris, also it is possible to maintain the performance of the manufacturing apparatus 1 over the long term.
(6) It is possible to provide an inspecting device that performs inspecting of the material for the additive manufacturing that is contained in the material supply tank 11. For example, by employing an X-ray inspecting device as such an inspecting device, it would be possible to acquire projection data relating to the interior of the material for additive manufacturing contained in the material supply tank 11, and for the analysis unit 171 to analyze this projection data and thereby to detect defects such as vacant holes or the like present in the interior of the material for the additive manufacturing. If, on the basis of the results of detection, large defects are found to be included in the material for the additive manufacturing, then it will be possible for the manufacturing apparatus 1 to notify the user by causing this detection result to be, for example, displayed upon a monitor (not shown in the figures) or the like. Thus, since the user will be able to know in advance that the material for the additive manufacturing that is contained in the material supply tank 11 is not suitable for employment for the additive manufacturing of a three dimensional shaped object, accordingly it becomes possible to take corrective measures, such as exchanging the current material for the additive manufacturing for some other material for the additive manufacturing that is suitable for manufacture of a three dimensional shaped object.
(7) Change of the manufacturing conditions is not limited to being performed on the basis of defect holes H in the solidified layer that is inspected with the inspecting unit 16. For example, the thickness from the vertically moving stage 13 to the upper surface of the solidified layer that has been manufactured may be measured with a three dimensional shape measurement device 161, and the analysis unit 171 may calculate the amount of error by comparing this measured thickness with the height shown in the design information. If the result of this analysis by the analysis unit 171 is that the measured thickness is lower than the height given in the design information by the error amount, then the decision unit 172 changes the manufacturing conditions during the forming of the next layer according to the error amount, so that the amount of supply of power material increases. But if the result of the analysis by the analysis unit 171 is that the measured thickness is higher than the height given in the design information by the error amount, then the decision unit 172 decides that changing the manufacturing conditions during the forming and the additive manufacturing of the next layer is to be performed according to the error amount, so as to reduce the amount of supply of the powder material, or that it is possible to perform correction by cutting off the error amount with the cutting unit 15. (8) While, in the explanation given above, a method was explained for forming the material layer in which the powder material Q was supplied on top of the solidified layer, appropriate variation may be implemented according to the material to be used. For example, if a three dimensional shaped object is to be manufactured by solidifying a material that is in liquid form, it would also be acceptable to form the material layer on top of the solidified layer by submerging the solidified layer to a predetermined depth below the liquid surface in an additive manufacturing chamber 131 that is filled with the material in liquid form. In addition, it would also be acceptable to arrange to spray the material directly upon the solidified layer, or to extrude it thereupon.

### Embodiment #2

A structure manufacturing system according to an embodiment of the present invention will now be explained with reference to the drawings. This structure manufacturing system of this embodiment may manufacture, for example, a formed article such as a door portion, an engine portion, or a gear portion of an automobile, or an electronic component on a circuit board.

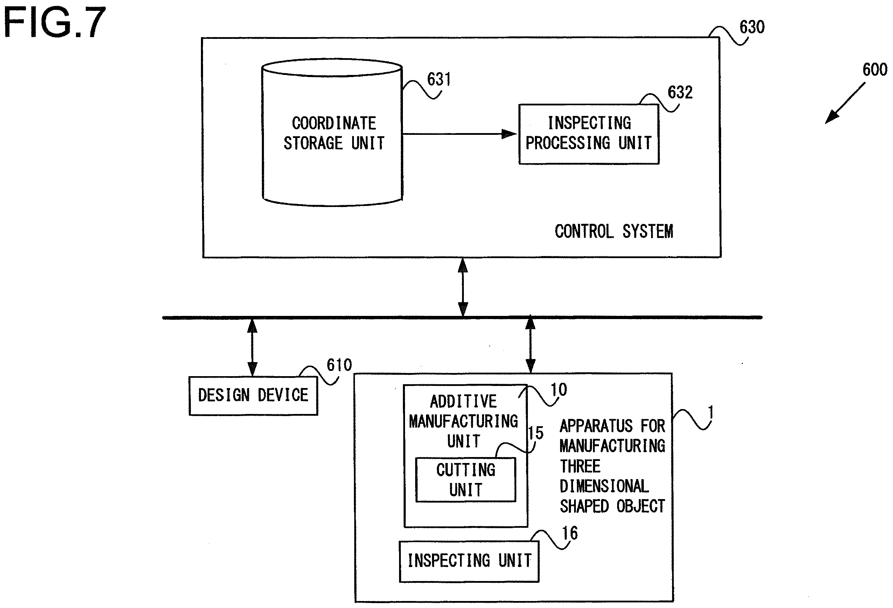

Fig. 7 is a block diagram showing an example of the structure of the structure manufacturing system 600 according to this embodiment. This structure manufacturing system 600 comprises an apparatus 1 for manufacturing a three dimensional shaped object (i.e. a manufacturing apparatus) as explained above in connection with the first embodiment or a variant embodiment, a design device 610, and a control system 630.

The design device 610 is a device that is employed by a user for creation of design information related to the shape of the structural element, and performs design processing by creating and storing such design information. This design information is information that specifies the coordinates of various positions upon the structural element. And the design information is outputted to the manufacturing apparatus 1 and to the control system 630 that will be described hereinafter. The manufacturing apparatus 1 then performs formation processing for manufacturing and forming the structural element, while using this design information that has been created by the design device 610.

As explained in connection with the first embodiment and the above variant embodiments, the inspecting unit 16 of the manufacturing apparatus 1 performs measurement processing in which the shape of the structure manufactured by the additive manufacturing unit 10 is measured. The inspecting unit 16 of the manufacturing apparatus 1 outputs information specifying coordinates of the structure (hereinafter termed "shape information"), which are the result of measurement of the structure, to the control system 630. And the control system 630 comprises a coordinate storage unit 631 and an inspecting processing unit 632. The coordinate storage unit 631 stores the design information created by the design device 610, as described above.

The inspecting processing unit 632 makes a decision as to whether or not the structure manufactured by the additive manufacturing unit 10 of the manufacturing apparatus 1 has been manufactured according to the design information created with the design device 610. To put it in another manner, the inspecting processing unit 632 makes a decision as to whether or not the structure that has been manufactured is a good quality product. In this case, the inspecting processing unit 632 reads out the design information stored in the coordinate storage unit 631, and performs an inspecting process to compare the design information with the shape information that has been inputted from the inspecting unit 16 of the manufacturing apparatus 1. As an inspecting process, for example, the inspecting processing unit 632 may compare the coordinates specified in the design information with the corresponding coordinates specified in the shape information, and may decide that this product is satisfactory and has been formed according to the design information if the result of the inspecting process is that the coordinates in the design information and the coordinates in the shape information agree with one another. However, if the coordinates specified in the design information and the corresponding coordinates specified in the shape information do not agree with one another, then the inspecting processing unit 632 decides whether or not the difference between the coordinates is within a predetermined range, and if it is within the predetermined range, decides that this is a poor quality product that nevertheless can be repaired.

If the inspecting processing unit 632 has decided that this is a poor quality product that nevertheless can be repaired, then it outputs repair information that specifies the amount of repair required for the bad portion or portions to the formation unit 10 of the manufacturing apparatus 1. Bad portions are coordinates in the shape information that do not agree with the coordinates in the design information, and the amount of repair required is the difference between the coordinates in the design information for the bad portions and the coordinates in their shape information. On the basis of this repair information that has been inputted, the additive manufacturing unit 10 performs repair processing by reprocessing the bad portion or portions of the structure. The additive manufacturing unit 10 may, for example, perform processing to cut away the bad portion or portions with the cutting unit 15.

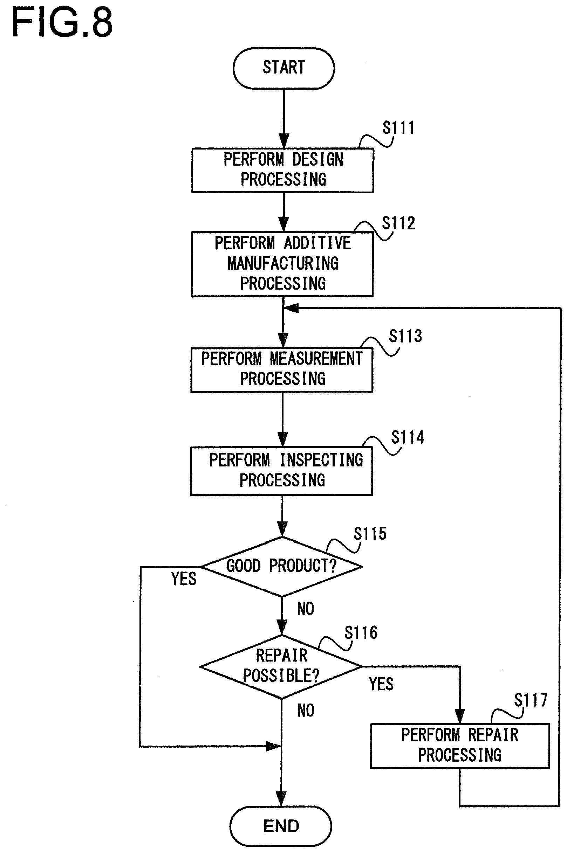

The processing performed by this structure manufacturing system 600 will now be explained with reference to the flow chart shown in Fig. 8.

In step S111, the design device 610, which is deployed when design of the structure is being performed by the user, creates and stores design information by design processing related to the shape of the structure, and then the flow of control proceeds to step S 112. It should be understood that this step is not to be considered as being limited only to design information that is created by the design device 610; if design information is already available, then acquisition of such design information by this design information being inputted is also to be considered as being included as one aspect of the present invention. In step S 112, the additive manufacturing unit 10 of the manufacturing apparatus 1 builds and manufactures the structure on the basis of the design information by the additive manufacturing processing, and then the flow of control proceeds to step S 113. In step S 113, the inspecting unit 16 of the manufacturing apparatus 1 performs measurement processing and measures the shape of the structure and outputs shape information, and then the flow of control proceeds to step S 114.

In step S 114, the inspecting processing unit 632 performs an inspecting process in which the design information generated by the design device 610 is compared with the shape information measured and outputted by the inspecting unit 16, and then the flow of control proceeds to step S115. In step S 115, on the basis of the results of the inspecting processing, the inspecting processing unit 632 makes a decision as to whether or not the structure that has been manufactured by the additive manufacturing unit 10 of the manufacturing apparatus 1 is a good quality product. If the structure is a good quality product, in other words if the coordinates in the design information and the coordinates in the shape information agree with one another, then an affirmative result is reached in this step S 115 and processing terminated. But if the structure is not a good quality product, in other words if the coordinates in the design information and the coordinates in the shape information do not agree with one another, or if coordinates are detected that are not included in the design information, then a negative result is reached in this step S115 and the flow of control proceeds to step S 116.

In step S116, the inspecting processing unit 632 makes a decision as to whether or not the bad site in the structure is repairable. If the bad site is not repairable, in other words if the difference between the coordinates in the design information for the bad portion and the coordinates in the shape information is beyond a predetermined range, then a negative decision is reached in step S116 and processing terminates. But if the bad portion can be repaired, in other words if the difference between the coordinates in the design information for the bad portion and the coordinates in the shape information is within the predetermined range, then an affirmative decision is reached in step S116 and the flow of control proceeds to step S 117. In this case, the inspecting processing unit 632 outputs repair information to the additive manufacturing unit 10 of the manufacturing apparatus 1. In step S 117, the additive manufacturing unit 10 performs repair processing upon the structure on the basis of the repair information that has been inputted, and then the flow of control returns to step S 113. It should be understood that, as described above, the additive manufacturing unit 10 may, for example, perform processing such as cutting away of the bad portion with the cutting unit 15, or the like.

With the structure manufacturing system according to the second embodiment described above, the following effects are obtained.
(1) The inspecting unit 16 of the manufacturing apparatus 1 of this structure manufacturing system 600 performs measurement processing by acquiring shape information for the structure that has been manufactured by the manufacturing device 620 on the basis of the design processing by the design device 610, and the inspecting processing unit 632 of the control system 630 performs inspecting processing in which the shape information acquired in the measurement processing is compared with the design information created by the design processing. Accordingly this makes a contribution to management of the product quality of the structure, since it is possible to inspect the structure for defects and/or to acquire information about its internal structure by non-destructive inspecting, and to decide whether or not the structure is a high quality product that has been manufactured according to the design information.
(2) It is arranged for the additive manufacturing unit 10 of the manufacturing apparatus 1 to perform repair processing by performing the additive manufacturing processing upon the structure for a second time on the basis of the results of comparison by the inspecting process. Therefore since, if the poor quality portion of the structure is repairable, it is possible to perform processing similar to the additive manufacturing processing upon the structure for a second time, accordingly this makes a contribution to the manufacture of a structure of high product quality that is close to the design information.

The present invention should not be considered as being limited to the embodiments described above; provided that the essential characteristics of the present invention are preserved, other aspects of the present invention that are considered to come within the scope of its technical concept are also to be considered as falling within the range of the present invention.

### REFERENCE SIGNS LIST

1: apparatus for manufacturing three dimensional shaped object (manufacturing apparatus)
10: additive manufacturing unit
11: material supply tank
12: re-coater
13: vertically moving stage
14: irradiation unit
15: cutting unit
16: inspecting unit
17: control device
161: three dimensional shape measurement device
162: X-ray inspecting device
171: analysis unit
172: decision unit
173: change unit
600: structure manufacturing system
610: design device
630: control system
632: inspecting processing unit

## Claims

1. An apparatus for manufacturing a three dimensional shaped object, comprising:
a manufacturing unit that manufactures a three dimensional shaped object in which a plurality of solidified layers are built up together by repeating to manufacture a solidified layer, which is layered, by performing solidification processing upon a material that is positioned in a region set according to a shape of the three dimensional shaped object that is to be manufactured, to supply a new material upon an upper portion of the solidified layer that has been manufactured, to perform the solidification processing upon the new material and thus to manufacture a new solidified layer; and
an inspecting unit that inspects the solidified layer that has already been built up, while the plurality of solidified layers are being built up together.

2. The apparatus for manufacturing a three dimensional shaped object according to Claim 1, wherein
the inspecting unit inspects the solidified layer before the manufacturing unit forms a new material layer, which is layered, upon the upper portion of the solidified layer.

3. The apparatus for manufacturing a three dimensional shaped object according to Claim 2, wherein
the manufacturing unit forms a material layer, which is layered, on a region where the solidification processing is to be performed, and performs the solidification processing under predetermined solidification processing conditions;
and further comprising;
a manufacturing condition change unit that, based upon results of inspecting of the solidified layer by the inspecting unit, changes at least one of manufacturing conditions when forming the new material layer in the region where the solidification processing is to be performed, and the solidification processing conditions when performing the solidification processing upon the new material layer.

4. The apparatus for manufacturing a three dimensional shaped object according to Claim 3, wherein,
when changing the manufacturing conditions, the manufacturing condition change unit changes at least one of supply speed of the material in the region in which solidification processing for the new material layer is to be performed, thickness of the new material layer, a number of times the material is supplied for the new material layer, a temperature of the new material layer, and the material from which the new material layer is formed.

5. The apparatus for manufacturing a three dimensional shaped object according to Claim 4, wherein:
the inspecting unit detects roughness of a surface of the solidified layer; and
the manufacturing condition change unit changes the manufacturing conditions according to the roughness detected by the inspecting section.

6. The apparatus for manufacturing a three dimensional shaped object according to Claim 4 or Claim 5, wherein
if a hole has been detected by the inspecting unit, the manufacturing condition change unit changes the manufacturing condition according to a shape, a size, and a positional relationship of each of the holes.

7. The apparatus for manufacturing a three dimensional shaped object according to Claim 4, wherein:
the inspecting unit acquires positional information for a hole formed in the solidified layer; and
the manufacturing condition change unit changes the manufacturing conditions according to the positional information for the hole acquired from the inspecting unit.

8. The apparatus for manufacturing a three dimensional shaped object according to Claim 7, wherein
the manufacturing condition change unit changes the manufacturing conditions so that the thickness of the new material layer becomes thinner, according to any one of a shape of the hole, a size of the hole, and a number of holes internal to the solidified layer detected by the inspecting unit.

9. The apparatus for manufacturing a three dimensional shaped object according to any one of Claims 4 through 8, wherein
the manufacturing condition change unit changes the solidification processing conditions according to the results of inspecting or according to the manufacturing conditions.

10. The apparatus for manufacturing a three dimensional shaped object according to Claim 9, wherein:
the manufacturing unit comprises an irradiation unit that hardens the material layer, which is layered, by scanning the material layer that is layered while irradiating an energy beam thereupon; and
according to the manufacturing conditions that have been changed, the manufacturing condition change unit changes at least one of a scanning path or a scanning speed of the energy beam irradiated by the irradiation unit, an intensity of the energy beam, or a temperature of the material layer when irradiated with the energy beam.

11. The apparatus for manufacturing a three dimensional shaped object according to any one of Claims 3 through 10, wherein
the manufacturing condition change unit changes the solidification processing conditions according to composition of the solidified layer or an internal structure of the solidified layer, as detected by the inspecting unit.

12. The apparatus for manufacturing a three dimensional shaped object according to any one of Claims 3 through 11, wherein
the decision unit compares design information for the three dimensional shaped object or shape data for the three dimensional shaped object based upon the design information with the solidified layer that has been inspected by the inspecting unit, and the manufacturing condition change unit changes the manufacturing conditions and/or the solidification processing conditions based upon results of comparison.

13. The apparatus for manufacturing a three dimensional shaped object according to any one of Claims 1 through 11, further comprising
a decision unit that, based upon results of inspecting of the solidified layer by the inspecting unit, makes a decision as to whether or not to supply the material to a region in which the solidification processing is to be performed.

14. The apparatus for manufacturing a three dimensional shaped object according to Claim 13, wherein
the decision unit compares design information for the three dimensional shaped object or shape data for the three dimensional shaped object based upon the design information with the shape of the solidified layer that has been inspected by the inspecting unit, and makes a decision as to whether to form a new material layer or to terminate manufacturing the three dimensional shaped object, according to results of comparison.

15. The apparatus for manufacturing a three dimensional shaped object according to Claim 14, wherein
the decision unit determines whether or not a defect can be corrected, and decides to form the new material layer if decision is made that correction is possible.

16. The apparatus for manufacturing a three dimensional shaped object according to Claim 15, wherein
the decision unit decides whether or not the defect can be repaired during manufacturing the next solidified layer, and, if a decision is made that the defect can be repaired, determines whether or not to change the manufacturing conditions for forming the new material layer or solidification processing conditions for solidification thereof.

17. The apparatus for manufacturing a three dimensional shaped object according to any one of Claims 1 through 16, wherein
the manufacturing unit further comprises a correction unit that performs correction processing upon the solidified layer based upon results of inspecting of the solidified layer by the inspecting unit.

18. The apparatus for manufacturing a three dimensional shaped object according to Claim 17 as depending upon Claim 15, wherein
if a decision is made by the decision unit that correction is possible, the manufacturing unit forms the new material layer after correction processing with the correction unit has been performed.

19. The apparatus for manufacturing a three dimensional shaped object according to Claim 18, wherein
if an outline shape of the solidified layer has an erroneous portion in which the error upon comparison with an outline shape in the design information for the three dimensional shaped object is greater than a predetermined value, then the correction unit cuts away the erroneous portion of the solidified layer.

20. The apparatus for manufacturing a three dimensional shaped object according to any one of Claims 1 through 19, wherein
the inspecting unit comprises a shape measurement device that inspects an external shape of the solidified layer, and an internal measurement device that inspects an internal state of the solidified layer.

21. The apparatus for manufacturing a three dimensional shaped object according to any one of Claims 1 through 20, wherein
the material is a powder material.

22. The apparatus for manufacturing a three dimensional shaped object according to any one of Claims 1 through 21, further comprising
a storage unit that stores information related to defects detected by the inspecting unit.

23. The apparatus for manufacturing a three dimensional shaped object according to Claim 22, further comprising
an analysis unit that analyzes a tendency for occurrence of defects based upon the information related to defects stored in the storage unit.

24. The apparatus for manufacturing a three dimensional shaped object according to Claim 23, wherein:
the analysis unit analyzes a change over time of the tendency for occurrence of defects; and
the decision unit makes a decision as to whether to change the formation conditions for the material layers or to change solidification processing conditions for the solidified layers, or to perform correction processing upon the solidified layers, based upon the change over time information that has been analyzed.

25. A method for manufacturing a structure, comprising:
creating design information related to a shape of the structure;
manufacturing the structure by performing solidification processing upon material that is positioned in regions set according to a shape of a three dimensional shaped object that is to be manufactured, based upon the design information;
acquiring shape information by measuring the shape of the structure during manufacture thereof before the structure is manufactured,; and
changing at least one of manufacturing conditions during forming of new material, and solidification processing conditions when performing solidification processing upon the new material, according to the shape information that has been acquired.

26. The method for manufacturing a structure according to Claim 25, wherein
the shape information that has been acquired after the structure has been manufactured is compared with the design information.

27. The method for manufacturing a structure according to Claim 26, wherein
re-processing of the structure executed based upon results of comparison of the shape information with the design information is performed.

28. The method for manufacturing a structure according to Claim 27, wherein
in the re-processing of the structure, manufacture of the structure is performed for a second time based upon the design information.
